# EUROPÄISCHE PATENTANMELDUNG

(11) **EP 2 862 968 A1**
(43) Veröffentlichungstag der Anmeldung: **22.04.2015**
(21) Anmeldenummer: 13189005.5
(22) Anmeldetag: 16.10.2013
(51) Int. Cl.: D03D 1/00, D03D 9/00, D03D 13/00, D03D 15/00, D03D 19/00, E06B 9/40, E04F 10/02

(54) **Lichtlenksystem**

(71) Anmelder: ETTLIN AKTIENGESELLSCHAFT, 76275 Ettlingen (DE)
(72) Erfinder: HÄNSCH, Frauke Susanne, 76137 Karlsruhe (DE)
(74) Vertreter: Pfiz, Thomas

(57) **Zusammenfassung**

Die Erfindung betrifft ein Lichtlenksystem mit einem textilen Flächengebilde (12), welches in einem Lichteinfallsbereich vor einem Raum (14) positionierbar ist und eine aus einer Vielzahl von Schussfäden (20) gebildete Schussfadenlage (26) aufweist, wobei die Schussfäden (20) im Wesentlichen geradlinig gestreckt sind und Gitteröffnungen (24) des Flächengebildes (12) begrenzen. Erfindungsgemäß wird vorgeschlagen, dass einige oder alle Schussfäden (20) einen durch mehrere individuelle Seitenpartien (32) begrenzten nicht-zirkularen Fadenquerschnitt aufweisen und unter einheitlicher Orientierung ihrer Seitenpartien (32) parallel zueinander angeordnet sind.

## Beschreibung

Die Erfindung betrifft eine Lichtlenksystem insbesondere für Sonnenlicht mit einem textilen Flächengebilde, welches in einem Lichteinfallsbereich vor einem abzuschirmenden oder auszuleuchtenden Raum positioniert oder positionierbar ist und eine aus einer Vielzahl von Schussfäden gebildete Schussfadenlage aufweist, wobei die Schussfäden im Wesentlichen geradlinig gestreckt sind und Gitteröffnungen des Flächengebildes begrenzen.

Aus der WO 2012/160115 A1 bekannt ist eine Wetterschutzvorrichtung mit einem eine Abschirmung gegen Witterungseinflüsse und auch Sonneneinstrahlung bildenden textilen Flächengebilde, welches seine Schutzfunktionen dadurch entfaltet, dass die Kettfäden und Schussfäden langgestreckt-rechteckige Gitteröffnungen begrenzen, wobei die Öffnungslänge mindestens das 10-fache der Öffnungsbreite beträgt. Damit wird erreicht, dass unerwünschte Strahlung und Niederschlag durch die engen Längsbegrenzungen abgehalten wird. Aufgrund der runden Fadenquerschnitte erfolgen allerdings auch Lichtreflexionen in den abgeschirmten Bereich hinein.

Ausgehend hiervon liegt der Erfindung die Aufgabe zugrunde, die im Stand der Technik bekannten Vorrichtungen weiter zu verbessern und eine flächige Struktur zur gezielten Beeinflussung des Lichteinfalls vor allem von Sonnen- bzw. Tageslicht in einem Gebäudebereich zu schaffen.

Zur Lösung dieser Aufgabe wird die in den unabhängigen Patentansprüchen angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, durch Anpassung einer Gewebetopographie eine definierte Lichtlenkstruktur zu schaffen. Dementsprechend wird erfindungsgemäß vorgeschlagen, dass einige oder alle Schussfäden einen durch mehrere individuelle Seitenpartien bzw. Seitenflächen begrenzten nicht-zirkularen Fadenquerschnitt aufweisen und unter einheitlicher Orientierung ihrer Seitenpartien als unidirektionale Fäden parallel zueinander angeordnet sind. Auf diese Weise wird eine gezielte Lichtlenkung ermöglicht, indem einheitlich ausgerichtete Seitenpartien eine optische Fläche zur direkten (spiegelnden) Reflexion und/oder Brechung bilden. Im Gegensatz zu runden Querschnitten werden durch segmentierte Fadenprofile bestimmte Einfallswinkelbereiche auch im Hinblick auf Mehrfachreflexionen effektiv ausgeblendet, so dass eine Art von "Lamelleneffekt" mit einer Fadenstruktur erreichbar ist. Der Schutzgrad wird damit wesentlich durch das Fadenprofil bestimmt, während geeignete Gitteröffnungen zur Durchsicht freigehalten werden können.

Um den Lichtlenkbereich sowohl hinsichtlich des Einfangs als auch der Rückstrahlung zu optimieren, ist es vorteilhaft, wenn die Seitenpartien mindestens einen planaren oder konkaven Bereich aufweisen.

Eine weitere Verbesserung ergibt sich dadurch, dass die Seitenpartien durch Vorsprünge, Aussparungen oder Kanten im Fadenquerschnitt voneinander abgegrenzt sind.

Besonders günstig für eine winklige Orientierung ist es, wenn die nicht-zirkularen Schussfäden einen polygonalen, insbesondere triangularen oder trilobalen Querschnitt aufweisen.

Eine weitere Erfindungsvariante sieht vor, dass die Schussfäden in Schussfadengruppen mit gruppenweise variierenden Fadendurchmessern angeordnet sind, wobei die Seitenpartien der Schussfadengruppen einheitlich orientiert sind. Aufgrund der in jeder Gruppe variierenden Fadendurchmesser ergeben sich bezogen auf die Gruppe ebenfalls unterschiedlich orientierte Seitenpartien gleichsam als Einhüllende der Schussfadengruppe bzw. des Rapports, so dass die vorstehend genannten Vorteile ebenfalls erzielbar sind.

Für eine gezielte Beeinflussung der Lichtstrahlung ist es vorteilhaft, wenn mindestens eine von dem Raum abgewandte Seitenpartie als Lichtlenkfläche mit einfallendem Licht beaufschlagt ist.

Um eine effektive Abschattung zu ermöglichen und Blendung sowie ungewollten Wärmeeintrag zu vermeiden, ist es vorteilhaft, wenn die Schussfäden mit mindestens einer Seitenpartie einen Reflektor zur Rückstrahlung von einfallendem Licht bilden. Vorteilhafterweise sollten die Schussfäden quer zur Ebene des Strahlengangs verlaufen.

Eine weitere Verbesserung der Abschattung bei gleichzeitig guter Durchsicht wird dadurch erreicht, dass die Schussfäden mit einer Licht reflektierenden oder absorbierenden Beschichtung versehen sind und/oder dunkel eingefärbt sind.

Um gezielt Strahlungsbereiche insbesondere bei schräg von oben einfallendem Sonnenlicht zu beeinflussen, ist es von Vorteil, wenn die Schussfäden einheitlich in einem begrenzten Winkelbereich reflektierend oder absorbierend beschichtet sind.

Eine weitere Funktionalität im Sinne einer gezielten Lichtnutzung lässt sich dadurch erreichen, dass die Lichtlenkfläche eine lichtdurchlässige Oberfläche bildet, so dass das Licht durch die transparenten Schussfänden in den auszuleuchtenden Raum hinein gelenkt wird. Dadurch lässt sich die Helligkeit in Innenräumen ohne Einsatz von Kunstlicht beeinflussen.

Vorteilhafterweise sind die Schussfäden aus monofilem Fadenmaterial gebildet, so dass definierte optische Oberflächen geschaffen werden. Um ggf. eine ungerichtete Streuung und damit auch einen Blendschutz zu ermöglichen, können ergänzend auch multifilamente Garne eingesetzt werden.

Eine besonders bevorzugte Struktur sieht vor, dass das Flächengebilde eine zweilagige Fadenstruktur aus eine Kettfadenlage bildenden Kettfäden und eine dazu parallele Schussfadenlage bildenden Schussfäden aufweist, wobei die Kettfäden und die Schussfäden durch Bindefäden miteinander verbunden sind und die Schussfäden an einer einzigen Seite der Kettfadenlage aufliegen.

Um die Nutzung zu erleichtern, ist es vorteilhaft, wenn das textile Flächengebilde in einer Haltekonstruktion flächig aufgespannt oder ausrollbar ist. Dabei kann es auch von Vorteil sein, wenn das textile Flächengebilde in einer transparenten Trägerplatte bzw. in einer Verbundstruktur, bspw. einem Verbundglas eingebettet ist. Eine weitere vorteilhafte Ausführung sieht vor, dass das textile Flächengebilde an der Außenseite eines Gebäudes vor einer Gebäudeöffnung angeordnet ist, wobei die Schussfäden horizontal verlaufen.

Im Folgenden wird die Erfindung anhand der in der Zeichnung schematisch dargestellten Ausführungsbeispiele näher erläutert. Es zeigen:
- Fig. 1: eine Lichtlenksystem mit einem vor einem Gebäude angeordneten textilen Flächengebilde in schaubildlicher Darstellung;
- Fig. 2 und 3: das als zweilagiges Drehergewebe ausgebildete textile Flächengebilde in ausschnittsweiser Draufsicht auf die Schussfaden- und die Kettfadenseite;
- Fig. 4: das textile Flächengebilde mit triangularen Schussfäden und daran reflektierten Lichtstrahlen in einem abgebrochenen Vertikalschnitt;
- Fig. 5: eine weitere Ausführungsform mit Schussfadengruppen unterschiedlichen Durchmessers in einer Fig. 4 entsprechenden Darstellung.

Das in der Zeichnung dargestellte Lichtlenksystem 10 umfasst ein textiles Flächengebilde 12, das in einem Lichteinfallsbereich vor einem abzuschirmenden oder auszuleuchtenden Raum 14 im Bereich einer Gebäudeöffnung außenseitig an einem Gebäude 16 angeordnet ist. Hierfür ist das textile Flächengebilde 12 bahnförmig als Rollo aus einer Wickelvorrichtung 18 ausziehbar. Der Raum 14 hinter dem textilen Flächengebilde 12 wird dann je nach Ausführungsform des Flächengebildes 12 gegen direkte Sonnenstrahlung abgeschattet bzw. gezielt damit ausgeleuchtet.

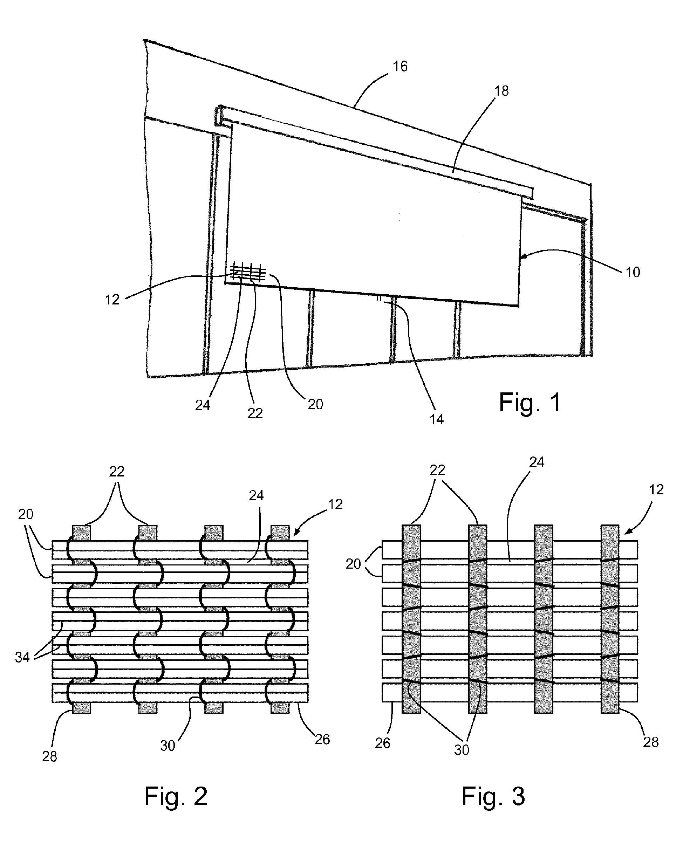

Wie in Fig. 1 nicht maßstäblich angedeutet, weist das textile Flächengebilde 12 gitterartig miteinander verbundene Schussfäden 20 und Kettfäden 22 auf. Die Kettfäden 22 verlaufen mit relativ großem gegenseitigem Fadenabstand in vertikaler Richtung, während die horizontalen Schussfäden 20 unter Einhaltung eines relativ engen gegenseitigen Fadenabstandes die Kettfäden 22 rechtwinklig kreuzen. Auf diese Weise werden in dem gitterförmigen Flächengebilde 12 rechteckförmige Gitteröffnungen 24 freigehalten, die eine gewisse Durchsicht gewähren.

Wie in Fig. 2 und 3 veranschaulicht, weist das textile Flächengebilde 12 eine zweilagige Flächenstruktur auf, in der die Schussfäden 20 und Kettfäden 22 geradlinig gestreckt sind und jeweils eine eigene ebene Fadenlage 26, 28 bilden. Die Schussfadenlage 26 liegt somit einseitig auf der Kettfadenlage 28 auf, wobei die Kettfadenlage 28 die dem Gebäuderaum 14 zugewandte Gewebeinnenseite und die Schussfadenlage 26 die nach außen gegen die Lichtquelle bzw. die Sonne gerichtete Gewebeaußenseite bildet.

In Richtung der Flächennormalen des textilen Flächengebildes 12 gesehen ergeben sich somit lichte Gitteröffnungen 24, die längsseitig durch die Schussfäden 20 begrenzt sind. Zur gegenseitigen Lagefixierung werden die Schussfäden 20 und Kettfäden 22 durch vergleichsweise dünne Bindefäden 30 nach Art einer Dreherbindung umschlungen. Die Bindefäden 30 durchqueren dabei die beiden Fadenlagen 26, 28 der Kett- und Schussfäden und umgreifen deren voneinander abgewandte Außenseiten.

Zweckmäßig bestehen die Kett-, Schuss- und Bindefäden aus einem monofilen, polymeren Fadenmaterial, beispielsweise aus PET. Die Fadenstärken der Schuss- und Kettfäden 20, 22 liegen im Bereich zwischen 0,1 bis 2,4 mm, während die dünneren Bindefäden 30 eine Stärke von 0,05 bis 0,1 mm besitzen. Bei nicht runden Querschnitten wird die maximale Querabmessung als Fadenstärke bestimmt. Die Gitteröffnungen 24 ergeben sich durch die Abstände zwischen benachbarten Schussfäden 20 von 0,05 bis 2 mm und die Abstände von Kettfadenmitte zu Kettfadenmitte von 0,6 bis 5 mm.

In einer ersten Ausführungsform weisen die Schussfäden 20 einen nicht-zirkularen Fadenquerschnitt auf und sind unter einheitlicher Orientierung parallel zueinander angeordnet. Eine einheitliche Orientierung lässt sich dadurch erreichen, dass die Schussfäden 20 beim Schusseintrag tangential und somit verdrehungsfrei von einer Vorratsrolle abgezogen und unter Zugspannung gehalten werden.

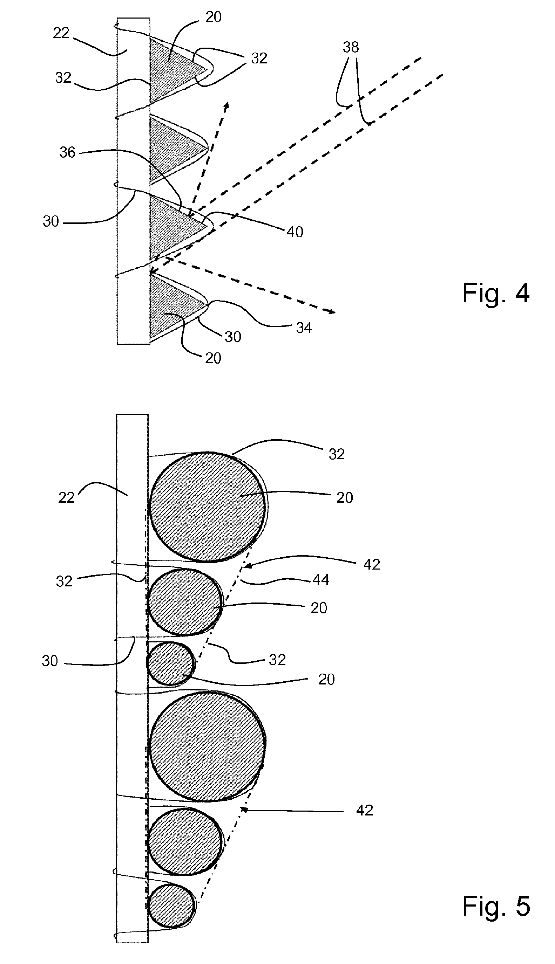

Wie am besten aus Fig. 4 ersichtlich, besitzen die im Querschnitt dreieckförmigen Schussfäden 20 drei planare Seitenflächen bzw. Seitenpartien 32, die durch spitzwinklig zulaufende Kanten 34 voneinander abgegrenzt sind. Aufgrund der einheitlichen Orientierung liegen alle Schussfäden 20 mit einer Seite auf der Lage der Kettfäden 22 auf, während die von den Kettfäden 22 weg geneigte Seitenpartien 32 als Lichtlenkfläche 36 mit einfallendem Sonnenlicht 38 beaufschlagbar sind.

In der in Fig. 4 veranschaulichten Konfiguration bilden die Schussfäden 20 als Mikrolamellen einen Reflektor zur Rückstrahlung des einfallenden Lichts 38. Dabei ist zumindest die Lichtlenkfläche 36 mit einer reflektierenden Beschichtung 40 versehen, so dass das Licht spiegelnd reflektiert wird. Eine solche segmentierte Beschichtung kann beispielsweise durch gerichtetes Bedampfen der Schussfäden 20 mit einer Metallschicht hergestellt werden. Bei einer vollflächigen reflektierenden Beschichtung aller Seitenpartien können auch Mehrfachreflexionen zu einer Rückstrahlung des Lichts 38 und damit zu einer effektiven Abschattung des Raums 14 hinter dem textilen Flächengebilde 12 führen.

Um zu vermeiden, dass zwischen den Fäden 20, 22 reflektierte Lichtstrahlung durch das Flächengebilde 12 hindurchtritt, können dem Fadenmaterial auch strahlungsabsorbierende Additive zugegeben werden. Die Durchsicht von innen nach außen lässt sich dadurch verbessern, dass das Fadenmaterial dunkel eingefärbt wird.

Der Reflexionsgrad des textilen Flächengebildes 12 kann über die Schussfadendichte und damit die Fadenabstände und über die Fadendurchmesser eingestellt werden. Grundsätzlich ist auch eine zonenweise Variation der Fadendichten und Fadenstärken möglich.

In einer weiteren Variante bestehen die Schuss- und Kettfäden 20, 22 aus einem transparenten Fadenmaterial, wobei das einfallende Licht durch Teilreflektion und Brechung an den Lichtlenkflächen 36 zur gezielten Ausleuchtung in den Raum 14 hinein gelenkt wird. Denkbar sind auch Schussfäden 20 mit Kombinationen von reflektiven und transmissiven Seitenpartien 32, beispielsweise um eine direkte Sonneneinstrahlung gegen den Boden eines Raums 14 zu vermeiden und im Übrigen aber eine Ausleuchtung zu ermöglichen.

Bei der in Fig. 5 gezeigten Ausführungsform sind gleiche oder ähnliche Teile wie vorstehend beschrieben mit denselben Bezugszeichen versehen. Der wesentliche Unterschied besteht darin, dass die Schussfäden 20 einen zirkularen Querschnitt aufweisen und in Schussfadengruppen 42 mit gruppenweise variierenden Fadendurchmessern angeordnet sind. Dies bedeutet, dass in jeder Schussfadengruppe 42 mehrere Schussfäden 20 gruppiert sind, die sich in ihrem Fadendurchmesser voneinander unterscheiden. Die Schussfadengruppen 42 sind dabei einheitlich orientiert, wobei Seitenpartien 32 durch die Einhüllende 44 der jeweiligen Schussfäden 20 definiert werden. Auch hier wird eine Anordnung ähnlich einer Lamelle verwirklicht. Durch geeignete Anpassung der Fadendurchmesser kann die Abschattung in einem gewünschten Winkelbereich beeinflusst werden. Dabei kann die schräg nach unten weisende Seitenpartie 32 durch eine gemeinsame Tangente an die Fadenquerschnitte bestimmt sein.

Grundsätzlich ist es anstelle der beschriebenen Halbdreherbindung zur Herstellung einer ebenen Schussfadenlage 26 auch möglich, eine Struktur mit gestreckten Schussfäden 20 durch eine Wirkware (Wirken und Rascheln), ein Gelege oder ein Gewebe z.B. in Leinwandbindung zu realisieren. Bei der Wirkware werden die gestreckten Schussfäden in einer Masche gehalten. Die Maschenstäbchen ersetzen in diesem Fall den Kettfaden. Beim Gelege werden Fadenlagen unidirektional aufeinander abgelegt. Die Struktur wird dann durch Vermaschung und Vernähen fixiert. In Leinwandbindung können weitgehend geradlinige Schussfäden dadurch realisiert werden, dass der Durchmesser des Schusses im Vergleich zu den Kettfäden deutlich größer ist und die Kettfadenspannung während der Produktion niedrig gehalten wird. So onduliert nur das Kettfadensystem, während der Schuss gestreckt zwischen den Kettfäden liegt. In allen Fällen ergeben sich im Wesentlichen geradlinig gestreckte Schussfäden, wobei die Abweichungen von der Linearität kleiner als die Fadendurchmesser sind.

## Patentansprüche

1. Lichtlenksystem insbesondere für Sonnenlicht mit einem textilen Flächengebilde (12), welches in einem Lichteinfallsbereich vor einem abzuschirmenden oder auszuleuchtenden Raum (14) positioniert oder positionierbar ist und eine aus einer Vielzahl von Schussfäden (20) gebildete Schussfadenlage (26) aufweist, wobei die Schussfäden (20) im Wesentlichen geradlinig gestreckt sind und Gitteröffnungen (24) des Flächengebildes (12) begrenzen, **dadurch gekennzeichnet, dass** einige oder alle Schussfäden (20) einen durch mehrere individuelle Seitenpartien (32) begrenzten nicht-zirkularen Fadenquerschnitt aufweisen und unter einheitlicher Orientierung ihrer Seitenpartien (32) parallel zueinander angeordnet sind.

2. Lichtlenksystem nach Anspruch 1, **dadurch gekennzeichnet, dass** die Seitenpartien (32) mindestens einen planaren oder konkaven Bereich aufweisen.

3. Lichtlenksystem nach Anspruch 1 oder 2, **dadurch gekennzeichnet, dass** die Seitenpartien (32) durch Vorsprünge, Aussparungen oder Kanten (34) im Fadenquerschnitt voneinander abgegrenzt sind.

4. Lichtlenksystem nach einem der Ansprüche 1 bis 3, **dadurch gekennzeichnet, dass** die nicht-zirkularen Schussfäden (20) einen polygonalen, insbesondere triangularen oder trilobalen Querschnitt aufweisen.

5. Lichtlenksystem insbesondere für Sonnenlicht mit einem textilen Flächengebilde (12), welches in einem Lichteinfallsbereich vor einem abzuschirmenden oder auszuleuchtenden Raum (14) positioniert oder positionierbar ist und eine aus einer Vielzahl von Schussfäden (20) gebildete Schussfadenlage (26) aufweist, wobei die Schussfäden (20) im Wesentlichen geradlinig gestreckt sind und Gitteröffnungen (24) des Flächengebildes (12) begrenzen, **dadurch gekennzeichnet, dass** die Schussfäden (20) in Schussfadengruppen (42) mit gruppenweise variierenden Fadendurchmessern angeordnet sind, wobei die Seitenpartien (32) der Schussfadengruppen (42) einheitlich orientiert sind.

6. Lichtlenksystem nach einem der Ansprüche 1 bis 5, **dadurch gekennzeichnet, dass** mindestens eine von dem Raum (14) abgewandte Seitenpartie (32) als Lichtlenkfläche (36) mit einfallendem Licht beaufschlagt ist.

7. Lichtlenksystem nach einem der Ansprüche 1 bis 6, **dadurch gekennzeichnet, dass** die Schussfäden (20) mit mindestens einer Seitenpartie (32) einen Reflektor zur Rückstrahlung von einfallendem Licht bilden.

8. Lichtlenksystem nach einem der Ansprüche 1 bis 7, **dadurch gekennzeichnet, dass** die Schussfäden (20) mit einer Licht reflektierenden oder absorbierenden Beschichtung (40) versehen sind und/oder dunkel eingefärbt sind.

9. Lichtlenksystem nach einem der Ansprüche 1 bis 8, **dadurch gekennzeichnet, dass** die Schussfäden (20) einheitlich in einem begrenzten Winkelbereich reflektierend oder absorbierend beschichtet sind.

10. Lichtlenksystem nach Anspruch 6, **dadurch gekennzeichnet, dass** die Lichtlenkfläche (36) eine lichtdurchlässige Oberfläche bildet, so dass das Licht durch die transparenten Schussfäden (20) in den auszuleuchtenden Raum (14) hinein gelenkt wird.

11. Lichtlenksystem nach einem der Ansprüche 1 bis 10, **dadurch gekennzeichnet, dass** die Schussfäden (20) aus monofilem Fadenmaterial gebildet sind.

12. Lichtlenksystem nach einem der Ansprüche 1 bis 11, **dadurch gekennzeichnet, dass** das Flächengebilde (12) eine zweilagige Fadenstruktur aus eine Kettfadenlage (28) bildenden Kettfäden (22) und eine dazu parallele Schussfadenlage (26) bildenden Schussfäden (20) aufweist, wobei die die Kettfäden (22) und die Schussfäden (20) durch Bindefäden (30) miteinander verbunden sind und die Schussfäden (20) an einer Seite der Kettfadenlage (28) aufliegen.

13. Lichtlenksystem nach einem der Ansprüche 1 bis 12, **dadurch gekennzeichnet, dass** das textile Flächengebilde (12) in einer Haltekonstruktion (18) flächig aufgespannt oder ausrollbar ist.

14. Lichtlenksystem nach einem der Ansprüche 1 bis 13, **dadurch gekennzeichnet, dass** das textile Flächengebilde (12) in einer transparenten Trägerplatte oder Verbundstruktur, insbesondere in einem Verbundglaseingebettet ist.

15. Lichtlenksystem nach einem der Ansprüche 1 bis 14, **dadurch gekennzeichnet, dass** das textile Flächengebilde (12) an der Außenseite eines Gebäudes (16) vor einer Gebäudeöffnung angeordnet ist, und dass die Schussfäden (20) horizontal verlaufen.
